# EUROPÄISCHE PATENTSCHRIFT

(11) **EP 0 679 663 B1**
(45) Veröffentlichungstag und Bekanntmachung des Hinweises auf die Patenterteilung: **29.10.1997**
(21) Anmeldenummer: 95105768.6
(22) Anmeldetag: 18.04.1995
(51) Int. Cl.: C08F 8/14, C08F 8/44, C08F 8/08

(54) **Verfahren zur Herstellung von wasserverdünnbaren Bindemitteln und deren Verwendung**
Process for the manufacture of water-dilutable binders and use thereof
Procédé de préparation de liants diluables à l'eau et leur application

(30) Priorität: 29.04.1994 DE 4414988
(43) Veröffentlichungstag der Anmeldung: 02.11.1995
(73) Patentinhaber: BAYER AG, 51368 Leverkusen (DE)
(72) Erfinder: Schneider, Volker, Dr., D-47669 Wachtendonk (DE); Arning, Eberhard, D-41564 Kaarst (DE); Blum, Harald, Dr., D-47669 Wachtendonk (DE); Wamprecht, Christian, Dr., D-41472 Neuss (DE)

(56) Entgegenhaltungen:
- EP-A- 0 285 933
- EP-A- 0 349 810
- EP-A- 0 350 684
- EP-A- 0 372 295
- EP-A- 0 428 956
- DE-A- 1 914 559
- GB-A- 1 511 652

## Beschreibung

Die Erfindung betrifft ein Verfahren zur Herstellung von oxidativ vernetzbaren, wasserverdünnbaren Bindemitteln, die chemisch eingebaute Carboxylgruppen und olefinisch ungesättigte, zur oxidativen Trocknung befähigte Kohlenwasserstoffreste enthalten, die nach diesem Verfahren erhältlichen Bindemittel und ihre Verwendung in Lacken, Beschichtungs- und Dichtmassen.

Oxidativ trocknende, wasserlösliche Bindemittel auf Alkydharzbasis sind bekannt (vgl. z. B. DE-PS 1669141, EP-A-0 002 488 und die dort zitierte Literatur). Daraus hergestellte Überzüge zeichnen sich üblicherweise durch gute filmoptische und filmmechanische Eigenschaften aus. Problematisch ist die durch das Polyestergrundgerüst gegebene, relativ hohe Verseifungsanfälligkeit solcher Produkte in wäßriger, neutralisierter Lösung. Bei Lagerung kommt es zur Phasentrennung bzw. zum Absetzen. Wünschenswert wären Produkte mit verbesserter Verseifungsstabilität, die darüber hinaus auch eine verkürzte Trockenzeit aufweisen.

In der EP-A-0 350 684 werden wäßrige, fettalkoholmodifizierte MSA-Copolymerisate als Bindemittel beschrieben, die rasch physikalisch trocknen, Überzüge mit guten filmoptischen Eigenschaften ergeben und zusätzlich oxidativ vernetzen. Der Nachteil dieser Bindemittel besteht darin, daß die zum Einsatz gelangenden Copolymerisate nur unter Mitverwendung von beträchtlichen Mengen an inerten Lösungsmitteln herstellbar sind, die in den letztendlich erhaltenen wäßrigen Beschichtungsmitteln im allgemeinen unverändert vorliegen. Dies läuft selbstverständlich dem Hauptzweck von wäßrigen Beschichtungsmitteln, der Minimierung des Gehalts an flüchtigen inerten Lösungsmitteln, entgegen.

Es war daher die der Erfindung zugrundeliegende Aufgabe, Bindemittel für wäßrige Beschichtungsmittel zur Verfügung zu stellen, die die Vorteile der Bindemittel gemäß EP-A-0 350 684 in sich vereinigen, ohne mit dem genannten Nachteil eines sehr hohen Lösungsmittelsgehalts behaftet zu sein.

Diese Aufgabe konnte mit der Bereitstellung des nachstehend näher beschriebenen erfindungsgemäßen Verfahrens gelöst werden. Das erfindungsgemäße Verfahren beruht auf der überraschenden Erkenntnis, daß bei Mitverwendung von unter den Reaktionsbedingungen flüssigen, copolymerisierbaren, jedoch nicht homopolymerisierbaren Monomeren der nachstehend näher beschriebenen Art die Mitverwendung von inerten Lösungsmitteln bei der Herstellung der Copolymerisate auf ein Minimum beschränkt werden kann, so daß der Lösungsmittelgehalt der letztendlich erhaltenen wäßrigen Beschichtungsmittel deutlich unter 5 Gew.-% liegt.

Gegenstand der Erfindung ist daher ein Verfahren zur Herstellung von oxidativ vernetzbaren, wasserverdünnbaren Bindemitteln durch
a) radikalisch initiierte Copolymerisation von copolymerisierbaren anhydridfunktionellen Verbindungen mit anderen olefinisch ungesättigten Monomeren unter Bildung eines, intramolekulare Carbonsäureanhydridgruppen aufweisenden Copolymerisats des mittleren Molekulargewichts Mw 5 000 bis 80 000 und eines Anhydridäquivalentgewichts von 240 bis 1 960,
b) anschließende Umsetzung von mindestens 50 % der in dem Copolymerisat vorliegenden Säureanhydridgruppen mit einwertigen Alkoholen der Formel

   R-OH

   unter ringöffnender Esterbildung, wobei gegebenenfalls vor, gleichzeitig oder im Anschluß hieran eine analoge Umsetzung mit bis zu 50 % der Anhydridgruppen mit einwertigen, gesättigten Alkoholen eines bei 32 bis 200 liegenden Molekulargewichts erfolgt, wobei R für einen, gegebenenfalls Ester- und/oder Ethergruppen aufweisenden, ein- und/oder mehrfach olefinisch ungesättigten aliphatischen Kohlenwasserstoffrest mit insgesamt 8 bis 30 Kohlenstoffatomen steht, und
c) Neutralisation der in dem Reaktionsprodukt gemäß Stufe b) vorliegenden Carboxylgruppen, gegebenenfalls nach Umsetzung einer Teilmenge der Carboxylgruppen mit organischen Epoxidverbindungen zu 10 bis 100 % (der dann noch vorliegenden Carboxylgruppen) mit einer Base,
dadurch gekennzeichnet, daß die zur Herstellung der Copolymerisate a) eingesetzten, olefinisch ungesättigten Monomeren zu 5 bis 50 Gew.-% aus unter den Reaktionsbedingungen nicht homopolymerisierbaren Monomeren besteht und man als, unter den Reaktionsbedingungen nicht homopolymerisierbare Monomere, Alkylester von α,ß-olefinisch ungesättigten Dicarbonsäuren mit 1 bis 8 Kohlenstoffatomen in den Alkylresten verwendet.

Gegenstand der Erfindung sind auch die nach diesem Verfahren erhältlichen Bindemittel.

Gegenstand der Erfindung ist schließlich auch die Verwendung der nach diesem Verfahren erhältlichen Bindemittel in wasserverdünnbaren Lacken und Beschichtungsmassen.

Die in der Stufe a) des erfindungsgemäßen Verfahrens hergestellten Copolymerisate weisen ein, nach der Methode der Gelpermeationschromatographie unter Verwendung von Polystyrol als Standard bestimmbares, mittleres Molekulargewicht Mw von 5 000 bis 80 000, vorzugsweise von 10 000 bis 50 000 und ein Anhydridäquivalentgewicht von 240 bis 1960, vorzugsweise 320 bis 980 auf. Unter "Anhydridäquivalentgewicht" ist hierbei das Gewicht in g zu verstehen, welches einem Mol an einpolymerisierten, intramolekularen Säureanhydridgruppen entspricht.

Die Herstellung der Copolymerisate in der Stufe a) erfolgt durch radikalisch initiierte Polymerisation von olefinisch ungesättigten, intramolekularen Dicarbonsäureanhydriden mit beliebigen anderen olefinisch ungesättigten Monomeren in Gegenwart von nicht säureanhydridfunktionellen ungesättigten Verbindungen, die unter den Bedingungen der Herstellung der Copolymerisate a) selbstverständlich mit den anderen Monomeren copolymerisierbar, jedoch nicht homopolymerisierbar sind. Die Einschränkung "unter den Reaktionsbedingungen nicht homopolymerisierbar" soll hierbei bedeuten, daß unter Reaktionsbedingungen (gleiche Reaktionszeit, gleiche Reaktionstemperatur, gleicher Initiator, gleiche Initiatorkonzentration, gleiche Konzentration in ggf. mitverwendetem inerten Lösungsmittel) unter welchen das zum Einsatz gelangende Monomerengemisch zu mindest zu 95 Gew.-% unter Copolymerisation abreagiert die "nicht homopolymerisierbaren" Verbindungen in Abwesenheit anderer Monomer nur zu max. 20 Gew.-% im Sinne einer Homopolymerisation abreagieren.

Üblicherweise gelangt bei dieser Copolymerisation ein Monomerengemisch, bestehend aus
i) 5 bis 40 Gew.-Teilen an copolymerisierbaren Dicarbonsäureanhydriden, wie z. B. Itaconsäureanhydrid oder Maleinsäureanhydrid, vorzugsweise Maleinsäureanhydrid,
ii) 45 bis 95 Gew.-Teilen an Monomeren des Molekulargewichtsbereichs 58 bis 170, ausgewählt aus der Gruppe bestehend aus Vinylaromaten, Isopropenylaromaten, Vinylestern, Vinylethern, Methacrylsäureestern mit 1 bis 6 Kohlenstoffatomen im Alkoholrest und beliebigen Gemischen derartiger Monomeren
iii) 0 bis 50 Gew.-Teilen an Monomeren, ausgewählt aus der Gruppe bestehend aus Acrylsäureestern mit 1 bis 18 Kohlenstoffatomen im Alkoholrest, Methacrylsäureestern mit 7 bis 18 Kohlenstoffatomen im Alkoholrest und beliebigen Gemischen derartiger Monomeren
und
iv) 5 bis 50 Gew.-Teilen an nicht säureanhydridfunktionellen, unter den Reaktionsbedingungen nicht homopolymerisierbaren Monomeren

zum Einsatz, wobei gegebenenfalls bis zu 15 Gew.-%, bezogen auf den gesamten Reaktionsansatz, an inerten Lösungsmitteln, wie z.B. Methoxypropylacetat, Xylol, Toluol, Butylacetat, Sovent-Naphtha, Dimethyldiglykol, Dimethylpropylenglykol, Diisobutylketon oder Gemische derartiger Lösungsmittel mitverwendet werden können, und wobei der Anteil der Monomeren iv), bezogen auf die Gesamtmenge der Monomeren, 5 bis 50 Gew.-%, vorzugsweise 10 bis 25 Gew.-% ausmacht.

Geeignete Monomere aus der Gruppe ii) sind beispielsweise Styrol, α-Methylstyrol, Vinyltoluol, am aromatischen Ring C₁-C₄-alkylsubstituierte Styrole, Vinylacetat, Vinylpropionat, Vinylbutyrat, Ethylvinylether, Butylvinylether, Methylmethacrylat, Ethylmethacrylat, n-Butylmethacrylat, iso-Butylmethacrylat, n-Hexylmethacrylat oder Cyclohexylmethacrylat

Geeignete Monomere aus der Gruppe iii) sind beispielsweise Ethylacrylat, n-Butylacrylat, iso-Butylacrylat, n-Propylacrylat, n-Pentylacrylat, Benzylacrylat, Stearylacrylat, Cyclohexylacrylat, n-Octylmethacrylat, 2-Ethylhexylmethacrylat, Laurylmethacrylat, Caprinmethacrylat oder Stearylmethacrylat.

Geeignete nicht homopolymerisierbare Verbindungen aus der Gruppe iv) sind beispielsweise Mono- oder Dialkylester von α,β-ungesättigten Dicarbonsäuren mit 1 bis 20 Kohlenstoffatomen in den Alkylresten. Besonders bevorzugt sind Fumarsäure- und Maleinsäuredialkylester mit 1 bis 20, vorzugsweise 1 bis 8 und besonders bevorzugt 1 bis 6 Kohlenstoffatomen in den Alkylresten, wie beispielsweise Dimethylmaleinat, Dimethylfumarat, Diethylmaleinat, Diethylfumarat, Dibutylmaleinat, Dibutylfumarat und Dicyclohexylfumarat, einzeln oder im Gemisch.

Bevorzugt werden zur Herstellung der Copolymerisate bei der Durchführung der Stufe a) des erfindungsgemäßen Verfahrens Monomerengemische folgender Zusammensetzung eingesetzt, wobei sich die nachstehenden Prozentangaben zu 100 ergänzen:
i) 10 bis 30 Gew.-% Maleinsäureanhydrid,
ii) 65 bis 90 Gew.-% Styrol, Vinyltoluol, Methylmethacrylat, n-Butylmethacrylat, iso-Butylmethacrylat, n-Hexylmethacrylat, Cyclohexylmethacrylat,
iii) 0 bis 25 Gew.-% n-Butylacrylat, 2-Ethylhexylacrylat, Laurylacrylat, Stearylacrylat, 2-Phenylethylacrylat, 2-Ethylhexylmethacrylat, Stearylmethacrylat, Laurylmethacrylat, Caprinmethacrylat und
iv) 10 bis 25 Gew.-% Dimethylmaleinat, Dimethylfumarat, Diethylmaleinat, Diethylfumarat, Dibutylmaleinat, Dibutylfumarat, Dicyclohexylfumarat.

Wie aus der beispielhaften Aufzählung hervorgeht, soll der Begriff "Alkylrest" stets auch Cycloalkylreste umfassen.

Die Herstellung der Copolymerisate erfolgt durch eine radikalisch initiierte Copolymerisation der Monomerenmischungen i) bis iii) in Gegenwart von Verbindungen der Gruppe iv).

Als Initiatoren geeignet sind organische Peroxide wie z. B. Dibenzoylperoxid, Ditert.-Butylperoxid, tert.-Butylperoxy-2-ethylhexanoat (tert.-Butylperoctoat), Didecanoylperoxid und Azoverbindungen, wie z. B. 2,2'-Azoisobuttersäurenitril, in Mengen von 0,5 bis 10 Gew.-%. Zur Erzielung des gewünschten Molekulargewichtes können auch Regler, wie z. B. n-Dodecylmercaptan, in Mengen von 0,01 bis 5 Gew.-% mitverwendet werden. Die Copolymerisation wird in 5 bis 50 %, vorzugsweise 10 bis 25 % der Monomeren aus der Gruppe iv) derart durchgeführt, daß diese vorgelegt, auf die gewünschte Reaktionstemperatur, die im allgemeinen bei 80 bis 170°C liegt, erwärmt und die restlichen Monomeren und der Initiator in 3 bis 8 Stunden zudosiert werden.

Die so hergestellten Copolymerisate werden dann gemäß der bevorzugten Variante des erfindungsgemäßen Verfahrens in der Stufe b) mit zur oxidativen Trocknung befähigten, monohydroxyfunktionellen Verbindungen umgesetzt, wobei mindestens 50 %, vorzugsweise mindestens 85 % der Säureanhydridgruppen unter ringöffnender Veresterung in Halbester überführt werden und wobei gegebenenfalls vor, gleichzeitig mit und/oder im Anschluß an diese Modifizierungsreaktion bis zu 50 %, vorzugsweise bis zu 15 % der Säureanhydridgruppen durch Umsetzung mit niedermolekularen, gesättigten, einwertigen Alkoholen in Halbester überführt werden.

Bei den in der Stufe b) des erfindungsgemäßen Verfahrens einzusetzenden einwertigen Alkoholen der Formel R-OH handelt es sich um gegebenenfalls Ether- und/oder Estergruppen aufweisende Verbindungen der obengemachten Definition R entsprechenden Art. Vorzugsweise handelt es sich um solche einwertige Alkohole der genannten Formel, für welche R für einen ein- oder mehrfach olefinisch ungesättigten, aliphatischen Kohlenwasserstoffrest mit 14 bis 18 Kohlenstoffatomen oder um einen Rest steht, wie er durch Entfernung der Hydroxylgruppe von Hydroxyalkylestern mit insgesamt bis zu 30 Kohlenstoffatomen von ein- oder mehrfach ungesättigten Monocarbonsäuren erhalten wird. Bei diesen Hydroxyalkylestern kann es sich auch um solche handeln, die in den Hydroxyalkylresten Ethersauerstoffatome aufweisen.

Geeignete Alkohole R-OH sind beispielsweise Octadienol, Lauroleinalkohol, Oleylalkohol, Linoleylalkohol, Linolenylalkohol, Elaidylalkohol, Gadoleylalkohol, Arachidonalkohol, Erucaalkohol, Elupenodonalkohol und Gemische dieser Alkohole.

Bevorzugte Alkohole R-OH sind die aus natürlichen Ölen wie z. B. Sojaöl oder Leinöl durch Umesterung und Hydrierung erhaltenen Fettalkoholgemische wie z.B. ®Ocenol 110/130 oder ®Ocenol 150/170 (Handelsprodukt Fa. Henkel).

Geeignete hydroxyfunktionelle Ester ungesättigter Fettsäuren sind z.B. den oben bei der Definition von R gemachten Angaben entsprechende, ethoxylierte oder propoxylierte Sojaöl-, Tallöl-, Erdnußöl- oder Saflorölfettsäure oder Mischungen daraus.

Beliebige Gemische der beispielhaft genannten olefinisch ungesättigten einwertigen Alkohole können in der Stufe b) des erfindungsgemäßen Verfahrens zum Einsatz gelangen.

Die Halbesterbildung wird üblicherweise im Anschluß an die Herstellung der Copolymerisate dermaßen durchgeführt, daß der Alkohol bzw. das Alkoholgemisch zu dem Copolymerisat zudosiert wird und die Reaktionsmischung bei 100 bis 160°C für 2 bis 10 Stunden bzw. so lange umgesetzt wird, bis die Gesamtsäurezahl konstant ist.

Die genannten ungesättigten Alkohole werden bei der Stufe b) des erfindungsgemäßen Verfahrens in solchen Mengen eingesetzt, daß mindestens 50 %, vorzugsweise mindestens 85 % der in den Copolymerisaten der Stufe a) vorliegenden Säureanhydridgruppen unter ringöffnender Esterbildung in Halbestergruppen überführt werden, d.h. das Molverhältnis von Säureanhydridgruppen zu Hydroxylgruppen der ungesättigten Alkohole liegt bei der Durchführung der Stufe b) im allgemeinen bei 1 : 0,5 bis 1 : 1, vorzugsweise bei 1 : 0,85 bis 1 : 1. Nach der Durchführung der Stufe b) des erfindungsgemäßen Verfahrens liegen in den so modifizierten Copolymerisaten im allgemeinen zwischen 15 und 50 Gew.-%, vorzugsweise zwischen 20 und 40 Gew.-% an eingebauten Struktureinheiten der Formel -O-R vor.

Zur Gewährleistung der Wasserverdünnbarkeit der so erhaltenen, oxidativ trocknenden Bindemittel werden die vorliegenden Carboxylgruppen zumindest teilweise durch Neutralisation mit einer geeigneten Base in Carboxylatgruppen überführt.

Zur Neutralisation können wäßrige, anorganische Basen wie z.B. Natriumhydroxid, Kaliumhydroxid oder Ammoniak verwendet werden. Ebenfalls geeignet sind organische Amine wie z. B. Triethylamin, Diethanolamin, Methyldiethanolamin, Dimethylethanolamin, Dimethylisopropanolamin, Diethylethanolamin, 2-Amino-2-methyl-1-propanol sowie Mischungen dieser und anderer Neutralisationsmittel. Die Neutralisation kann beispielsweise nach folgenden Methoden erfolgen:

Ein Wasser/Neutralisationsmittel-Gemisch wird auf 40 bis 80°C erwärmt und die heiße Harzschmelze oder -lösung darin eingerührt. Das Neutralisationsmittel kann, gegebenenfalls mit Wasser verdünnt, auch direkt zur Harzlösung gegeben werden und die neutralisierte Harzlösung dann durch Zugabe von Wasser auf den gewünschten Festkörpergehalt eingestellt werden.

Bei der Durchführung der Neutralisationsreaktion werden bis zu 100 %, vorzugsweise 20 bis 80 %, der vorliegenden Carboxylgruppen durch Neutralisation in Carboxylatgruppen überführt.

Gemäß einer besonderen Ausführungsform des erfindungsgemäßen Verfahrens werden bis zu 50 %, vorzugsweise bis zu 15 % der in den Copolymerisaten aus der Stufe a) vorliegenden Säureanhydridgruppen mit einwertigen gesättigten Alkoholen unter ringöffnender Esterbildung zur Reaktion gebracht. Diese Umsetzung erfolgt in völliger Analogie zu der genannten Umsetzung mit den ungesättigten, einwertigen Alkoholen und kann vor, gleichzeitig mit oder im Anschluß an die Modifizierung mit den ungesättigten Alkoholen stattfinden.

Vorzugsweise erfolgt diese Umsetzung im Anschluß an die Modifizierung gemäß Stufe b) und zwar so, daß die nach der Modifizierung mit den ungesättigten Alkoholen noch vorliegenden Säureanhydridgruppen zu mindestens 95 %, vorzugsweise zu 100 % unter ringöffnender Esterbildung in Halbestergruppen überführt werden. Um eine möglichst vollständige Umsetzung zu erreichen, kann auch ein Überschuß an niedermolekularen, einwertigen Alkoholen eingesetzt werden. In einem solchen Falle könnte beispielsweise das Äquivalentverhältnis der Hydroxylgruppen der einwertigen Alkohole (zur oxidativen Trocknung befähigte Alkohole + niedermolekulare, einwertige, gesättigte Alkohole ) zu Anhydridgruppen bei beispielsweise 1 : 1 bis 1,25 : 1 liegen.

Geeignete einwertige, gesättigte Alkohole sind z.B. solche des Molekulargewichtsbereichs 32 bis 200 wie Methanol, Ethanol, Propanol, n-Butanol, n-Pentanol, n-Hexanol, Cyclohexanol, 2-Ethylhexanol, Methylglykol, Ethylglykol, Butylglykol, Methoxypropanol, Ethoxypropanol, Butoxypropanol, Methyldiglykol, Ethyldiglykol, Butyldiglykol, Glykolsäuremethylester, Glykolsäureethylester, Milchsäuremethylester oder Gemische derartiger Alkohole.

Gemäß einer weiteren Variante des erfindungsgemäßen Verfahrens, die auch mit der zuletzt genannten Variante der zusätzlichen Modifizierung mit niedermolekularen, gesättigten, einwertigen Alkoholen kombinierbar ist, werden die nach der Modifizierungsreaktion mit den einwertigen Alkoholen vorliegenden Carboxylgruppen, gegebenenfalls zu 1 bis 70 %, vorzugsweise zu 5 bis 50 % durch eine Reaktion mit Epoxidgruppen aufweisenden organischen Verbindungen in Estergruppen überführt.

Geeignete Epoxidgruppen aufweisende, organische Verbindungen sind solche des Molekulargewichtsbereichs 44 bis 400 wie beispielsweise Monoepoxide, wie z.B. Ethylenoxid, Propylenoxid, 1,2-Epoxybutan, 1,2-Epoxy-2-methylpropan, 2,3-Epoxybutan, Cyclohexenoxid, Styroloxid, epoxyfunktionelle Ether wie z.B. 1,2-Epoxy-3-phenoxypropan, 1-Allyloxy-2,3-epoxypropan, Methylglycidylether, tert.-Butylglycidylether, epoxyfunktionelle Ester wie z.B. Versaticsäureglycidylester oder Gemische derartiger und anderer Epoxide.

Zur Beschleunigung der Reaktion zwischen Carboxylgruppen und Epoxid können übliche Katalysatoren, wie z.B. Tetrabutylammoniumbromid, Benzyltriethylammoniumchlorid, Tetraethylammoniumchlorid zugesetzt werden.

Die Reaktion wird üblicherweise bei 80 bis 150 °C während 3 bis 12 Stunden durchgeführt. Die solchermaßen mit Epoxiden modifizierten, oxidativ trocknenden Copolymerisate können nun entsprechend den oben gemachten Ausführungen durch zumindest teilweise Neutralisation der noch verbleibenden Carboxylgruppen in wasserverdünnbare Harze überführt werden.

Bei allen Varianten des erfindungsgemäßen Verfahrens werden Art und Mengenverhältnisse der Ausgangsmaterialien sowie der Neutralisationsgrad (= Prozentsatz der Carboxylgruppen, die durch Neutralisation in Carboxylatgruppen überführt worden sind) so bemessen, daß in den erfindungsgemäßen Bindemitteln 1,5 bis 47, vorzugsweise 3 bis 25 Gew.-% der Monomere iv) eingebaut sind, 15 bis 50, vorzugsweise 20 bis 40 Gew.-% an Struktureinheiten der Formel -O-R vorliegen und die Bindemittel einen Gehalt an Carboxylgruppen von 10 bis 250, vorzugsweise 80 bis 200 Milliäquivalent pro 100 g Feststoff aufweisen, die zu 10 bis 100 %, vorzugsweise 20 bis 80 % durch Umsetzung mit einer Base neutralisiert, d. h. in Carboxylatgruppen überführt worden sind. Die genannten Angaben bezüglich des Gehalts an Carboxylgruppen beziehen sich somit sowohl auf die freien, nicht neutralisierten Carboxylgruppen als auch die neutralisierten Carboxylgruppen, d. h. die dann vorliegenden Carboxylatgruppen.

Die erfindungsgemäßen Bindemittel fallen im allgemeinen bei Verwendung von wäßrigen Neutralisationsmitteln unmittelbar in Form von wäßrigen Dispersionen an. Gewünschtenfalls kann die Herstellung von wäßrigen Dispersionen auch im Anschluß an die wasserfrei durchgeführte Neutralisationsreaktion in an sich bekannter Weise erfolgen.

Zur Unterstützung der Wasserverdünnbarkeit bzw. Dispergierbarkeit ist es auch möglich, geringe Mengen, etwa 0,01 bis 2 % oberflächenaktive Substanzen zuzusetzen.

Die in wäßriger Form, vorzugsweise als 20 bis 50 Gew.-%ige, wäßrige Dispersion vorliegenden Bindemittel können gegebenenfalls noch geringe Mengen an organischen Lösungsmitteln (vorzugsweise weniger als 5 Gew.-%, bezogen auf Feststoff) enthalten. Die wäßrigen Dispersionen können direkt ohne weitere Zusätze als Lack für die Herstellung von klaren Überzügen eingesetzt werden.

In der Regel werden jedoch Pigmente und übliche Zusatzstoffe, wie Trocknungsbeschleuniger, Antioxidantien, Hautverhinderungsmittel, Antischaummittel, Netzmittel, Füllstoffe usw. zugegeben. Bevorzugte Trocknungsbeschleuniger sind die an sich bekannten Sikkative, d. h. Salze von (cyclo)-aliphatischen Monocarbonsäuren mit 6 bis 18 Kohlenstoffatomen mit Metallen wie beispielsweise Kobalt, Mangan, Nickel, Chrom, Zink, Zirkonium, Aluminium, Calcium, Barium oder Blei. Diese können sowohl in der Harzschmelze eingearbeitet, bei der Lackanreibung zugesetzt als auch nachträglich in den fertigen Lack eingearbeitet werden.

Pigmente, Zusatzstoffe und oxidativ trocknendes Copolymerisat werden zusammen in bekannter Weise mit den üblichen Mischaggregaten, wie z. B. Sandmühle, Perlmühle, Kugelmühle oder Dissolver, zu fertigen Lacken angerieben.

Die fertigen Lacke enthalten bevorzugt weniger als 5 % flüchtige, organische Verbindungen und haben üblicherweise Festgehalte von 30 bis 60 %.

Die oxidativ trocknenden Copolymerisate können in oder als wäßrige, lufttrocknende Beschichtungsmittel für Kunststoffe, Metalle, Glas, Holz, Papier, Pappe und Keramik verwendet werden. Weitere Anwendungsmöglichkeiten sind die Verwendung der Bindemittel in Druckfarben für Textil oder Leder bzw. in Imprägnier- oder Verfestungsmitteln für Papier, Textilien und Leder.

Die Überzugsmittel können nach herkömmlichen Techniken, z. B. Flut-, Tauch-, Spritz-, Streich-, Gieß- und Walzauftrag aufgebracht werden.

Die erfindungsgemäßen Systeme eignen sich besonders für die Anwendung bei Raumtemperatur. Zur Beschleunigung der Trockenzeit ist jedoch auch eine forcierte Wärmetrocknung bei etwa 40 bis 100 °C möglich.

In den nachstehenden Beispielen sind Angaben über Teile und Prozente Gewichtsangaben und beziehen sich auf die nicht flüchtigen Feststoffe, falls nicht ausdrücklich etwas anderes festgestellt wird.

### Beispiel 1

In einem 4 l Dreihalskolben mit Rühr-, Kühl- und Heizvorrichtung werden 88,2 g Maleinsäuredimethylester und 53,1 g Methoxypropylacetat eingewogen und auf 135°C aufgeheizt. In 3 Stunden wird eine Mischung von 125,0 g Maleinsäureanhydrid, 100,0 g Styrol, 275,0 g Methylmethacrylat und 2,5 g n-Dodecylmercaptan und parallel dazu in 4 Stunden 32,8 g tert.-Butylperoctoat (70 %ig in Kohlenwasserstoffgemisch) zudosiert. Nach 1 Stunde Nachrührzeit bei 135°C werden im Abstand von 15 Minuten zweimal 0,7 g tert.-Butylperoctoat zugegeben und weitere 2 Stunden gerührt. Nach Zugabe von 300,0 g ®Ocenol 110/130 werden weitere 10 Stunden bei 135°C gerührt. Nach Abkühlen auf 120°C werden 13,8 g Ethanol, 49,0 g Methoxypropanol und 1,0 g Benzyltriethylammoniumchlorid zugegeben und 3 Stunden gerührt. Nach Abkühlen auf 90°C werden 88,0 g Glycidylester der Versaticsäure (®Cardura E 10, Shell Chemie) zugegeben und so lange bei 90°C gerührt bis die Gesamtsäurezahl konstant ist. Die erhaltene Harzschmelze wird mit einer auf 50°C erwärmten Mischung von 23,4 g Ammoniaklösung (23,5 %ig) und 1520,0 g Wasser 4 Stunden bei 60°C dispergiert. Nach Zugabe von 15,1 g ®Ascinin R conz. (Hautverhinderungsmittel, Bayer AG) wird die Dispersion filtriert.

Die wäßrige Harzdispersion hat einen Festgehalt von 35,7 % und einen Gehalt an organischen Colösern von 2,3 %. Der Anteil an einpolymerisierten Monomeren der Gruppe iv) beträgt 8,7 %.

### Beispiel 2

In einem 4 l Dreihalskolben mit Rühr-, Kühl- und Heizvorrichtung werden 88,2 g Dicyclohexylfumarat und 53,1 g Methoxypropylacetat eingewogen und auf 135°C aufgeheizt. In 3 Stunden wird eine Mischung von 125,0 g Maleinsäureanhydrid, 100,0 g Styrol, 275,0 g Methylmethacrylat und 2,5 g n-Dodecylmercaptan und parallel dazu in 4 Stunden 32,8 g tert.-Butylperoctoat (70 %ig in Kohlenwasserstoffgemisch) zudosiert. Nach 1 Stunde Nachrühren bei 135°C werden im Abstand von 15 Minuten zweimal 0,7 g tert.-Butylperoctoat zugegeben und weitere 2 Stunden gerührt. Nach Zugabe von 300,0 g ®Ocenol 110/130 werden weitere 10 Stunden bei 135°C gerührt. Nach Abkühlen auf 120°C werden 13,8 g Ethanol und 1,0 g Benzyltriethylammoniumchlorid zugegeben und 3 Stunden gerührt. Nach Abkühlen auf 90°C werden 88,0 g Glycidylester der Versaticsäure (®Cardura E 10, Shell Chemie) zugegeben und so lange bei 90°C gerührt bis die Gesamtsäurezahl konstant ist. Die erhaltene Harzschmelze wird mit einer auf 50°C erwärmten Mischung von 24,1 g Ammoniaklösung (22,9 %ig) und 1380,0 g Wasser 4 Stunden bei 60°C dispergiert. Nach Zugabe von 15,1 g ®Ascinin R conz. (Hautverhinderungsmittel, Bayer AG) wird die Dispersion filtriert.

Die wäßrige Harzdispersion hat einen Festgehalt von 42,4 % und einen Gehalt an organischen Colösern von 2,6 %. Der Anteil an einpolymerisierten Monomeren der Gruppe iv) beträgt 8,7 %.

### Beispiel 3

In einem 4 l Dreihalskolben mit Rühr-, Kühl- und Heizvorrichtung werden 88,2 g Dicyclohexylfumarat und 53,5 g Methoxypropylacetat eingewogen und auf 150°C aufgeheizt. In 3 Stunden wird eine Mischung von 125,0 g Maleinsäureanhydrid, 100,0 g Styrol, 275,0 g Methylmethacrylat und 2,5 g n-Dodecylmercaptan und parallel dazu in 4 Stunden 23,0 g Di-tert.-Butylperoxid zudosiert und 2 Stunden nachgerührt. Nach Abkühlen auf 135°C werden 300,0 g ®Ocenol 110/130 zugegeben und weitere 10 Stunden bei 135°C gerührt. Nach Abkühlen auf 120°C werden 13,8 g Ethanol und 1,0 g Benzyltriethylammoniumchlorid zugegeben und 3 Stunden gerührt. Nach Abkühlen auf 90°C werden 88,0 g Glycidylester der Versaticsäure (®Cardura E 10, Shell Chemie) zugegeben und so lange bei 90°C gerührt bis die Gesamtsäurezahl konstant ist. Die erhaltene Harzschmelze wird mit einer auf 50 °C erwärmten Mischung von 24,1 g Ammoniaklösung (22,9 %ig) und 1430,0 g Wasser 4 Stunden bei 60°C dispergiert. Nach Zugabe von 15,1 g ®Ascinin R conz. (Hautverhinderungsmittel, Bayer AG) wird die Dispersion filtriert.

Die wäßrige Harzdispersion hat einen Festgehalt von 39,6 % und einen Gehalt an organischen Colösern von 2,6 %. Der Anteil an einpolymerisierten Monomeren der Gruppe iv) beträgt 8,7 %

### Vergleichsbeispiel

In einem 4 l Dreihalskolben mit Rühr-, Kühl- und Heizvorrichtung werden 428,6 g Xylol eingewogen und auf 135°C aufgeheizt. In 3 Stunden wird eine Mischung von 250,0 g Maleinsäureanhydrid, 200,0 g Styrol, 550,0 g Methylmethacrylat und parallel dazu in 4 Stunden 65,5 g tert.-Butylperoctoat (70 %ig in Kohlenwasserstoffgemisch) zudosiert. Nach 1 Stunde Nachrühren bei 135°C werden im Abstand von 15 Minuten zweimal 1,4 g tert.-Butylperoctoat zugegeben und weitere 2 Stunden gerührt. Nach Zugabe von 600,0 g ®Ocenol 110/130 werden weitere 10 Stunden bei 135°C gerührt. Nach Abkühlen auf 120°C werden 13,8 g Ethanol, 99,5 g Methoxypropanol und 1,0 g Benzyltriethylammoniumchlorid zugegeben und 3 Stunden gerührt. Nach Abkühlen auf 90°C werden 176,0 g Glycidylester der Versaticsäure (®Cardura E 10, Shell Chemie) zugegeben und so lange bei 90°C gerührt bis die Gesamtsäurezahl konstant ist. Die erhaltene Harzschmelze wird mit einer auf 50°C erwärmten Mischung von 60,8 g Ammoniaklösung (22,9 %ig) und 3370,0 g Wasser 4 Stunden bei 60°C dispergiert. Anschließend wird das Xylol azeotrop abdestilliert und nach Zugabe von 27,6 g ®Ascinin R conz. (Hautverhinderungsmittel, Bayer AG) wird die Dispersion filtriert.

Die wäßrige Harzdispersion hat einen Festgehalt von 41,3 % und einen Gehalt an organischen Colösern von 2,2 %.

Die Dispersionen wurden mit 0,06 Gew.-% Kobaltsikkativ (Kobaltgehalt bez. auf Festharz) versetzt und mit einer Naßfilmstärke von 180 m aufgerakelt. Die Lacke trockneten innerhalb von 60 Minuten zu klaren, klebfreien Filmen mit guter Optik. Nach einer Trocknungszeit von 7 Tagen erreichten die Filme eine gute Wasser- und Lösemittelfestigkeit.

| | Bsp. 1 | Bsp. 2 | Bsp. 3 | Vergleich |
|---|---|---|---|---|
| Sandtrocknung (min) | 30 | 20 | 30 | 20 |
| Antrocknung (min) | 45 | 30 | 40 | 35 |
| Pendelhärte nach König (sec) nach 7 Tagen | 45 | 87 | 80 | 78 |
| Wasserfestigkeit nach 7 Tagen¹) | 3 | 1 | 2 | 3 |

| | | | | |
|---|---|---|---|---|
| ¹) 0 = ohne Befund; 5 = Lackfilm abgelöst | | | | |

Die Gegenüberstellung der erfindungsgemäßen Beispiele 1 bis 3 und des Vergleichsbeispiels zeigt, daß jeweils vergleichbare lacktechnische Eigenschaften und ein vergleichbarer Gehalt an organischen Lösungsmitteln resultieren, wobei jedoch erfindungsgemäß der Destillationsschritt zur Entfernung von überschüssigen Mengen an organischen Lösungsmitteln entfallen kann.

## Patentansprüche

1. Verfahren zur Herstellung von oxidativ vernetzbaren, wasserverdünnbaren Bindemitteln durch
a) radikalisch initiierte Copolymerisation von copolymerisierbaren anhydridfunktionellen Verbindungen mit anderen olefinisch ungesättigten Monomeren unter Bildung eines, intramolekulare Carbonsäureanhydridgruppen aufweisenden Copolymerisats des mittleren Molekulargewichts Mw 5 000 bis 80 000 und eines Anhydridäquivalentgewichts von 240 bis 1 960,
b) anschließende Umsetzung von mindestens 50 % der in dem Copolymerisat vorliegenden Säureanhydridgruppen mit einwertigen Alkoholen der Formel
R-OH
unter ringöffnender Esterbildung, wobei gegebenenfalls vor, gleichzeitig oder im Anschluß hieran eine analoge Umsetzung mit bis zu 50 % der Anhydridgruppen mit einwertigen, gesättigten Alkoholen eines bei 32 bis 200 liegenden Molekulargewichts erfolgt, wobei R für einen, gegebenenfalls Ester- und/oder Ethergruppen aufweisenden, ein- und/oder mehrfach olefinisch ungesättigten aliphatischen Kohlenwasserstoffrest mit insgesamt 8 bis 30 Kohlenstoffatomen steht, und
c) Neutralisation der in dem Reaktionsprodukt gemäß Stufe b) vorliegenden Carboxylgruppen, gegebenenfalls nach Umsetzung einer Teilmenge der Carboxylgruppen mit organischen Epoxidverbindungen zu 10 bis 100 % (der dann noch vorliegenden Carboxylgruppen) mit einer Base,
dadurch gekennzeichnet, daß die zur Herstellung der Copolymerisate a) eingesetzten, olefinisch ungesättigten Monomeren zu 5 bis 50 Gew.-% aus unter den Reaktionsbedingungen nicht homopolymerisierbaren Monomeren besteht und
man als unter den Reaktionsbedingungen nicht homopolymerisierbare Monomere Alkylester von α,β-olefinisch ungesättigten Dicarbonsäuren mit 1 bis 8 Kohlenstoffatomen in den Alkylresten verwendet.

2. Verfahren gemäß Anspruch 1, dadurch gekennzeichnet, daß man als unter den Reaktionsbedingungen nicht homopolymerisierbare Monomere Fumarsäure- und/oder Maleinsäure-bis-alkylester mit 1 bis 6 Kohlenstoffatomen in den Alkylresten in einer Menge von 10 bis 25 Gew.-%, bezogen auf das Gesamtgewicht der zur Herstellung der Copolymerisate a) eingesetzten Monomeren, verwendet.

3. Verfahren gemäß Anspruch 1, dadurch gekennzeichnet, daß man vor der Neutralisation 1 bis 70 % der nach der ringöffnenden Esterbildung gemäß Stufe b) vorliegenden Carboxylgruppen mit Epoxidgruppen aufweisenden Verbindungen unter ringöffnender Esterbildung umsetzt.

4. Gemäß Anspruch 1 erhältliche Bindemittel.

5. Verwendung der gemäß Anspruch 1 erhältlichen Bindemittel in wasserverdünnbaren Lacken und Beschichtungsmassen.

## Claims

1. Process for the production of oxidatively crosslinkable, water-dilutable binders by
a) radical-initiated copolymerization of copolymerizable anhydride-functional compounds with other olefinically unsaturated monomers to form a copolymer containing intramolecular carboxylic anhydride groups and having an average molecular weight Mw of 5,000 to 80,000 and an anhydride equivalent weight of 240 to 1,960,
b) subsequent reaction of at least 50% of the acid anhydride groups present in the copolymer with monohydric alcohols of the formula
R-OH
by ring-opening esterification, wherein an analogous reaction of up to 50% of the anhydride groups with monohydric saturated alcohols having a molecular weight of 32 to 200 optionally takes place before, at the same time as or after the ring-opening esterification, wherein R stands for a mono- and/or polyolefinically unsaturated aliphatic hydrocarbon radical with a total of 8 to 30 carbon atoms which optionally contains ester and/or ether groups, and
c) neutralization of the carboxyl groups present in the reaction product of step b) with a base, optionally after partial reaction of the carboxyl groups (10 to 100% of the carboxyl groups still present) with organic epoxide compounds,
characterized in that 5 to 50 wt.% of the olefinically unsaturated monomers used for the production of the copolymers a) comprise monomers which cannot be homopolymerized under the reaction conditions and alkyl esters of α,β-olefinically unsaturated dicarboxylic acids with 1 to 8 carbon atoms in the alkyl radicals are used as monomers which cannot be homopolymerized under the reaction conditions.

2. Process according to Claim 1, characterized in that fumaric acid and/or maleic acid bis-alkyl esters with 1 to 6 carbon atoms in the alkyl radicals are used in a quantity of 10 to 25 wt.%, related to the total weight of the monomers used for the production of the copolymers a), as monomers which cannot be homopolymerized under the reaction conditions.

3. Process according to Claim 1, characterized in that before the neutralization, 1 to 70% of the carboxyl groups present after the ring-opening esterification in step b) are reacted with compounds containing epoxide groups by ring-opening esterification.

4. Binders obtainable according to Claim 1.

5. Use of the binders obtainable according to Claim 1 in water-dilutable lacquers and coating compositions.

## Revendications

1. Procédé pour la préparation de liants diluables à l'eau et réticulables par oxydation, par
a) copolymérisation déclenchée par voie radicalaire de composés copolymérisables à fonctionnalité anhydride avec d'autres monomères à insaturation oléfinique avec formation d'un copolymère présentant des groupes intramoléculaires d'anhydrides d'acides carboxyliques et possédant un poids moléculaire moyen Mw de 5.000 à 80.000 et un poids d'équivalents anhydrides de 240 à 1.960,
b) mise en réaction ultérieure d'au moins 50% des groupes d'anhydrides d'acides présents dans le copolymère avec des alcools monovalents répondant à la formule
R-OH
avec estérification donnant lieu à l'ouverture du noyau, dans laquelle, le cas échéant, avant, simultanément ou à la suite de cette dernière, on procède à une mise en réaction analogue des groupes anhydrides, jusqu'à concurrence de 50%, avec des alcools saturés monovalents d'un poids moléculaire se situant de 32 à 200, formule dans laquelle R représente un radical d'hydrocarbure aliphatique à mono- et/ou polyinsaturation oléfinique, présentant éventuellement des groupes esters et/ou éthers et contenant au total de 8 à 30 atomes de carbone, et
c) neutralisation des groupes carboxyle présents dans le produit réactionnel selon l'étape b), le cas échéant après mise en réaction d'une quantité partielle des groupes carboxyle avec des composés époxydes organiques à concurrence de 10 à 100% (des groupes carboxyle encore présents à ce moment) avec une base,
caractérisé en ce que les monomères à insaturation oléfinique mis en oeuvre pour la préparation des copolymères a) sont constitués, jusqu'à concurrence de 5 à 50% en poids, par des monomères non homopolymérisables dans les conditions réactionnelles, et on utilise, à titre de monomères non homopolymérisables dans les conditions réactionnelles, des esters alkyliques d'acides dicarboxyliques à insaturation oléfinique α,β contenant de 1 à 8 atomes de carbone dans les résidus alkyle.

2. Procédé selon la revendication 1, caractérisé en ce qu'on utilise, à titre de monomères non homopolymérisables dans les conditions réactionnelles, des esters bis-alkyliques de l'acide fumarique et/ou de l'acide maléique contenant de 1 à 6 atomes de carbone dans les résidus alkyle en une quantité de 10 à 25% en poids rapportés au poids total des monomères mis en oeuvre pour la préparation des copolymères a).

3. Procédé selon la revendication 1, caractérisé en ce que, avant la neutralisation, on fait réagir de 1 à 70% des groupes carboxyle présents après l'estérification selon l'étape b) donnant lieu à l'ouverture du noyau, avec des composés présentant des groupes époxydes avec estérification donnant lieu à l'ouverture du noyau.

4. Liants que l'on obtient conformément à la revendication 1.

5. Utilisation des liants que l'on obtient conformément à la revendication 1, dans des laques, des vernis ou des peintures et dans des matières d'enduction diluables à l'eau.
